# FASCICULE DE BREVET EUROPEEN

(11) **EP 2 481 670 B1**
(45) Date de publication et mention de la délivrance du brevet: **04.06.2014**
(21) Numéro de dépôt: 12000518.6
(22) Date de dépôt: 26.01.2012
(51) Int. Cl.: B64C 11/26, B64C 27/48

(54) **Pale et procédé de fabrication de ladite pale**
Schaufelblatt und Verfahren zur Herstellung eines solchen Schaufelblatts
Blade and method for manufacturing said blade

(30) Priorité: 31.01.2011 FR 1100289
(43) Date de publication de la demande: 01.08.2012
(73) Titulaire: Airbus Helicopters, 13725 Marignane Cedex (FR)
(72) Inventeur: Bianchi, Laurent, 13012 Marseille (FR); Gaffiero, Jacques, 75017 Paris (FR); Michel, Bernard, 13860 Peyrolles en Provence (FR); Isidore, Nicolas, 13290 Les Milles (FR)
(74) Mandataire: GPI & Associés

(56) Documents cités:
- DE-U1- 9 114 658
- US-A- 3 754 840
- US-A- 5 222 297

## Description

La présente invention concerne une pale ainsi que le procédé de fabrication de cette pale.

Lors de son mouvement rotatif, une pale est soumise à un torseur d'efforts et par suite subit un effort centrifuge ainsi que des efforts multiples dus aux mouvements de battement, de traînée et de torsion, la torsion étant provoquée notamment par les changements de pas visant à modifier l'inclinaison de la pale par rapport au plan du moyeu soutenant cette pale. Ces efforts génèrent bien sûr des moments de flexion et de torsion.

Les efforts et moments subis par la pale dus en particulier à la force centrifuge et à la torsion doivent alors être transmis au moyeu par la pale.

Les moyens de fixation de la pale au moyeu sont alors soumis à des efforts et des moments susceptibles d'être destructeur, le terme « effort » désignant par la suite lesdits efforts et moments par raison de simplification. De plus, on comprend qu'il est peut être délicat d'inspecter une pale pour visualiser d'éventuels dommages. En outre, il est avantageux d'optimiser des moyens de fixation pour limiter leurs masses et réduire la traînée aérodynamique qu'ils génèrent en vol.

L'arrière plan technologique des pales et notamment des pales d'une hélice inclut une pluralité de documents, par exemple les documents RU 2 040 432 C1, RU 2 058 249 C1, RU 2 058 250 C1, RU 2 058 251 C1, GB 2 244 525, CA 1 321 735, GB 1 319 235, FR 2 312 673 A1, FR 2 639 021 A1, GB 2 443 482, GB 2 449 058 A, US 2 008 075 602 A1, US 4 643 647A, US 4 664 600 A, US 4 685 864 A, EP 1 484 475 A2, EP 1 669 547 A2, GB 2 440 345 A, US 2009 004 008 A1, US 2009 035 131 A1, EP 2 159 378 A2, FR 2 195 255 A, FR2 605 586 A1, FR 2 682 992 A1, FR 2 683 764 A1, FR 2 684 719 A1, FR 2 685 249 A1, FR 2 685 732 A1, FR 2 732 406 A1, FR 2 906 320 A1, US 2006 257 260 A1, FR 2 921 099 A1, US 2007 092 379 A1, US 5 022 824 A, US 5 022 825 A, EPO 362 886 A2, US 5 017 092 A, GB 2 237 532 A, US 5 127 802 A, US 5 269 658 A, WO 9 308 017 A1, WO 9 214 646 A1, US 5 163 817 A, WO 00 664 29 A1, US 6 213 719 B1, US 4 302 155 A, US 440 7635 A, CA 401 168 A, US 4 966 527 A, RU 2001828 C1, US 5 24 0377A, CZ 1 302U1, FR 2 718101A1, RU2142895C1, SU1775974A1, RU 2099188 C1, US 2002 008 177 A1, US 2003 156 944 A1, US 2006 140 772 A1, US 2008 187441 A1, US 2008 113 179 A1, US 7 503 750.

Par exemple, le document WO 9 308 017 présente une pale munie d'un sous-ensemble de longeron comportant un élément de retenue en métal et un matériau cellulaire autour duquel sont tressés des fibres de structure.

Le document US 4 302 155 présente une pale munie d'une embase métallique percée en son centre pour accueillir un tube de pilotage. Cette embase inclut une portion cylindrique et une portion en forme de coupe définissant une cavité, une mousse s'étendant à partir de cette cavité.

La mousse et l'embase sont alors couvertes de tissus formant une peau rigide.

Par ailleurs, la pale comprend des colliers de fixation à un moyeu enserrant la peau rigide et l'embase.

On connaît aussi les documents DE9114658, US3754840 et US 5222297.

Tous les efforts subis par la pale paraissent transiter par l'embase, cette embase étant difficilement visualisable du fait de la présence de la peau rigide.

La présente invention a alors notamment pour objet de proposer une pale dont la zone de liaison à un moyeu est visualisable et présente éventuellement une résistance optimisée.

Selon l'invention, une pale est munie d'une ferrure de fixation à un moyeu et d'un élément aérodynamique muni d'un longeron s'étendant en envergure d'une zone d'attache vers une zone distale, la zone d'attache entourant une douille de transmission des efforts centrifuges subis par la pale, la douille étant liée par un axe traversant à ladite ferrure.

De plus, la pale est notamment remarquable en ce qu'elle comporte un organe de transmission des efforts de torsion pourvu d'une première demi-coquille et d'une deuxième demi-coquille enserrant conjointement la zone d'attache, chaque demi-coquille comprenant une première partie ajourée permettant un accès visuel à la douille lorsque l'élément aérodynamique est retiré la ferrure et une deuxième partie coopérant avec un caisson de torsion entourant la zone distale, ledit organe de transmission étant solidaire en rotation de la ferrure autour d'un axe de torsion de la pale.

Ainsi, lorsque la pale est fixée à un moyeu en rotation par sa ferrure de fixation, les efforts subis par l'élément aérodynamique de la pale durant la rotation sont transmis à la ferrure de fixation de cette pale, cette ferrure transmettant lesdits efforts au moyeu.

Plus précisément, les efforts centrifuges sont repris par la ferrure via la douille enserrée par le longeron alors que les efforts de torsion sont repris par la ferrure via l'organe de transmission coopérant avec le caisson de torsion. Ainsi, l'organe de transmission étant distinct de la douille, la pale possède un cheminement d'efforts centrifuge distinct d'un cheminement d'efforts de torsion à des fins de tolérance aux dommages optimisée.

De plus, les différents cheminements sont visualisables aisément à des fins de maintenance, l'élément aérodynamique pouvant être retiré de la ferrure pour permettre la visualisation de la douille et de l'organe de transmission. Les zones de concentration des efforts susceptibles d'être détériorées lors de la fabrication et de l'utilisation de la pale sont donc aisément accessibles pour pouvoir être inspectées.

Enfin, la pale a une compacité élevée induisant une traînée aérodynamique optimisée en vol.

Par ailleurs, cette pale peut inclure une ou plusieurs des caractéristiques qui suivent.

Par exemple, le caisson de torsion est disposé autour de la zone distale du longeron, un revêtement recouvrant le caisson de torsion.

Un moyen de remplissage peut être agencé entre le caisson de torsion et le revêtement, tel qu'un moyen pourvu d'une ou plusieurs mousses de remplissage.

De même, un organe de remplissage peut être disposé entre l'organe de transmission et le longeron, tel qu'un moyen pourvu d'une ou plusieurs mousses de remplissage.

Par ailleurs, la deuxième partie de la première demi-coquille et la deuxième partie de la deuxième demi-coquille forment conjointement une surface tronconique en contact avec le caisson de torsion.

Par exemple, la surface tronconique comprend des sections elliptiques, ladite surface tronconique étant définie par une génératrice ayant un point décrivant une ellipse.

La forme tronconique de l'organe de transmission permet d'obtenir un caisson de torsion de forme tronconique à son pied pour favoriser l'adhérence du revêtement extérieur audit pied du caisson de torsion.

Selon un autre aspect, la première partie de la première demi-coquille et la première partie de la deuxième demi-coquille forment conjointement un cylindre solidarisé en rotation à la ferrure.

De plus, la première partie de la première demi-coquille et la première partie de la deuxième demi-coquille forment éventuellement conjointement une surface de contact solidarisée en rotation à la ferrure par un moyen d'arrêt.

Ce moyen d'arrêt peut comprendre un moyen mécanique tel qu'un pion ou encore un méplat de ladite surface de contact

Il est à noter en outre que la première demi-coquille et la deuxième demi-coquille peuvent être symétriques.

Par ailleurs, la pale peut comporter un moyen d'assemblage de la première demi-coquille à la deuxième demi-coquille pour favoriser la fixation de l'organe de transmission. Par exemple, le moyen d'assemblage inclut au moins un pion de positionnement d'une demi-coquille coopérant avec un orifice de l'autre demi-coquille.

Selon un autre aspect, le longeron est en matériaux composites et comporte alors des fibres s'étendant selon une direction longitudinale de la pale, ledit caisson de torsion étant en matériaux composites en comportant des fibres s'étendant selon une direction présentant un angle aigu avec ladite direction longitudinale tel qu'un angle de plus ou moins 45 degrés par exemple.

Selon une variante, la première partie de la première demi-coquille et la première partie de la deuxième demi-coquille comprennent chacune un ergot de fixation, la ferrure ayant une glissière longitudinale et une glissière en arc de cercle par ergot, chaque glissière longitudinale débouchant sur une glissière en arc de cercle.

Par suite, lors de l'insertion de l'élément aérodynamique dans la ferrure, on met en coïncidence chaque ergot avec une glissière longitudinale. Lorsque que les ergots atteignent la glissière en arc de cercle associée, on effectue une rotation de la ferrure, sur un angle de 45 degrés par exemple, pour mettre en coïncidence chaque douille de l'élément aérodynamique avec un perçage de la ferrure afin d'y insérer un axe traversant.

Cette variante présente l'avantage additionnel de posséder un dispositif à baïonnette pouvant maintenir l'élément aérodynamique dans la ferrure lors d'une rupture accidentelle de l'axe traversant.

Eventuellement, chaque ergot s'étendant selon une direction longitudinale sur une longueur prédéterminée, chaque glissière en arc de cercle s'étend longitudinalement sur une longueur supérieure à ladite longueur prédéterminée pour présenter un jeu lorsque ledit ergot est inséré dans cette glissière en arc de cercle.

Dès lors, dans le cas d'une rupture d'un axe traversant, chaque ergot viendrait buter contre des faces de retenue de la glissière longitudinale associée. Il en résulte un léger balourd pouvant être détecté à l'aide de capteurs adéquats et pouvant donc être signalé à un opérateur à des fins de maintenance.

Outre une pale, l'invention a pour objet le procédé de fabrication de cette pale. Selon ce procédé,
- on fabrique par exemple par drapage un longeron s'étendant d'une zone d'attache vers une zone distale, la zone d'attache entourant une douille, puis on pré-polymérise ce longeron,
- on agence un organe de transmission des efforts de torsion pourvu d'une première demi-coquille et d'une deuxième demi-coquille sur la zone d'attache, chaque demi-coquille comprenant une première partie ajourée permettant un accès à la douille et une deuxième partie, un organe de remplissage étant éventuellement inséré entre l'organe de transmission et le longeron,
- on fabrique un caisson de torsion par bobinage ou drapage autour de la deuxième partie de chaque demi-coquille et de la zone distale du longeron,
- on fabrique un revêtement extérieur par bobinage ou drapage autour du caisson de torsion, un moyen de remplissage étant éventuellement inséré entre le caisson de torsion et le revêtement extérieur, puis on polymérise l'ensemble comportant le longeron, l'organe de transmission, le caisson de torsion et le revêtement extérieur pour obtenir un élément aérodynamique,
- on insère l'élément aérodynamique dans une ferrure et on relie ladite ferrure à la douille par un axe traversant.

L'invention et ses avantages apparaîtront avec plus de détails dans le cadre de la description qui suit avec des exemples de réalisation donnés à titre illustratif en référence aux figures annexées qui représentent :
- la figure 1, une vue montrant une pale selon l'invention,
- les figures 2 à 7, dus vues explicitant le procédé de fabrication d'une pale selon l'invention,
- les figures 8 à 10 des coupes de ladite pale, et
- les figures 11 à 13, des schémas présentant une variante de la pale selon l'invention.

On note que trois directions X, Y et Z orthogonales les unes par rapport aux autres sont représentées sur les figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

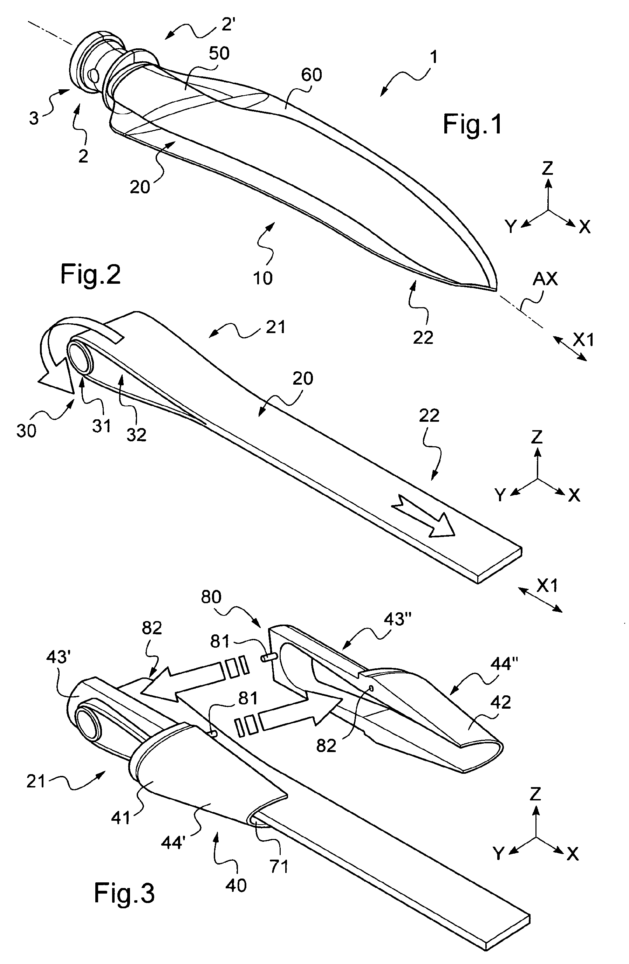

La figure 1 présente une pale 1 comportant un élément aérodynamique 10 et une ferrure 2 pour fixer l'élément aérodynamique 10 à un moyeu, un moyeu d'une hélice par exemple. La ferrure 2 peut de plus comporter un moyen de commande du pas de l'élément aérodynamique non représenté sur les figures par commodité.

L'élément aérodynamique comprend un longeron 20 non visible sur la figure 1 pour reprendre au moins une partie des efforts centrifuges subis par la pale 1 lors de sa rotation autour d'un axe de rotation. Ce longeron 20 peut être en matériaux composites, et s'étendre d'une zone d'attache 21 entourant une douille coopérant avec la ferrure 2 via un axe traversant 3 vers une zone distale 22.

Ce longeron 20 coopère de plus avec un organe de transmission des efforts de torsion en relation avec un caisson de torsion 50, le revêtement extérieur 60 de la pale 1 étant disposé autour de ce caisson de torsion 50.

Ainsi, la pale 1 inclut un moyen de transmission principal des efforts centrifuges, la douille autour de laquelle est enroulé la zone d'attache du longeron, et un organe de transmission principal des efforts de torsion distinct dudit moyen de transmission principal.

Les efforts centrifuges et de torsion cheminent alors principalement vers la ferrure 2 via deux cheminements distincts.

Les figures 2 à 7 présentent en détail une réalisation préférée de la pale 1 , et permettent de constater que cette pale est aisément réalisable tout en garantissant un accès visuel vers les zones subissant des contraintes mécaniques importantes en utilisation.

En référence à la figure 2, on fabrique un longeron 20 s'étendant d'une zone d'attache 21 vers une zone distale 22. La zone d'attache 21 est notamment enroulée autour d'un moyen de transmission des efforts centrifuges incluant au moins une douille 31 voire au moins une mousse de remplissage 32.

Favorablement, le longeron 20 est un longeron en matériaux composites pourvu de fibres s'étendant de la zone d'attache 21 vers la zone distale 22 selon une direction longitudinale X1, soit selon l'envergure de la pale à réaliser pour reprendre les efforts centrifuges exercés sur cette pale.

Ainsi, on peut draper les fibres en prenant soin de les enrouler autour du moyen de transmission et notamment de la douille 31 par des méthodes usuelles, puis on pré-polymérise l'ensemble longeron-moyen de transmission.

On note que ledit ensemble peut alors être inspecté visuellement pour vérifier l'absence de défauts.

A ce stade, on agence alors un organe de transmission 40 des efforts de torsion sur la zone d'attache 21 du longeron 20. Cet organe de transmission 40 inclut une première demi-coquille 41 et d'une deuxième demi-coquille 42 enfilées transversalement sur la zone d'attache 21 puis assemblées l'une à l'autre par un moyen d'assemblage 80 réversible.

Par exemple, le moyen d'assemblage 80 possède au moins un pion de positionnement 81 saillant d'une demi-coquille pour coopérer avec un orifice de positionnement 82 de l'autre demi-coquille 1.

Selon un autre aspect, un organe de remplissage 71 est éventuellement logé entre le longeron 20 et l'organe de transmission 40.

Chaque demi-coquille 41, 42 comprend alors d'une part une première partie 43', 43" ajourée transversalement permettant un accès visuel à la douille 31 voire à la zone d'attache du longeron et, d'autre part une deuxième partie 44', 44" ayant pour fonction d'être reliée à un caisson de torsion.

On note que chaque demi-coquille peut être constituée d'un unique bloc métallique par exemple, ou encore comporter une pluralité de pièces fixées les unes aux autres.

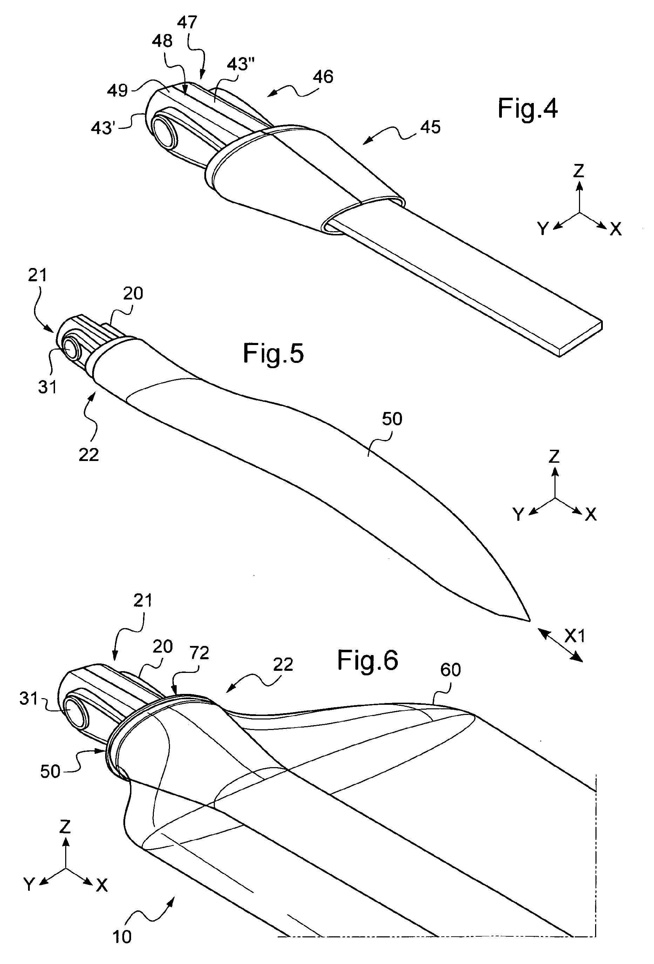

En référence à la figure 4, la première partie 43' de la première demi-coquille 41 et la première partie 43" de la deuxième demi-coquille 42 forment éventuellement conjointement un cylindre 46 apte à être solidarisé en rotation à une ferrure 2 de fixation.

En effet, la première partie 43' de la première demi-coquille 41 et ladite première partie 43" de la deuxième demi-coquille 42 forment conjointement une surface de contact 47 pouvant être solidarisée en rotation à une ferrure 2 par un moyen d'arrêt 48 tel qu'un méplat 49 de cette surface de contact.

En outre, la deuxième partie 44' de la première demi-coquille 41 et la deuxième partie 44" de la deuxième demi-coquille 42 présentées forment conjointement une surface tronconique 45 apte à être en contact avec ledit caisson de torsion 50. Par exemple, la surface tronconique 45 est obtenue à l'aide d'une génératrice appuyés sur une ellipse et présentant de fait des sections elliptiques.

Une telle surface tronconique permet de réaliser une portion tronconique d'un caisson de torsion 50, et finalement favorise l'accrochage d'un revêtement extérieur à une telle portion tronconique du caisson de torsion.

Par ailleurs, la première demi-coquille et la deuxième demi-coquille présentées sont symétriques pour former conjointement une coquille ayant pour fonction d'être un organe de transmission des efforts de torsion subis par la pale 1.

Toutefois, la première demi-coquille et la deuxième demi-coquille présentées peuvent être dissymétriques.

En référence à la figure 5, lorsque l'organe de transmission est en place sur la zone d'attache 21 du longeron 20, on fabrique un caisson de torsion 50 autour de la deuxième partie 44', 44" de chaque demi-coquille 41, 42 et de la zone distale 22 du longeron 20.

Par suite, on drape ou on bobine des fibres s'étendant selon une direction présentant un angle aigu avec ladite direction longitudinale X1, de 45 degrés par exemple.

La deuxième partie peut alors être d'un dimensionnement réduit dans la mesure où cette deuxième partie reprend principalement les efforts de torsion de la pale.

Dès lors, en référence à la figure 6, on fabrique un revêtement extérieur 60 autour du caisson de torsion 50 par drapage par exemple. Un moyen de remplissage 72 est éventuellement agencé entre le caisson de torsion 50 et le revêtement extérieur 60.

A l'issue de cette fabrication, on polymérise l'ensemble comportant le longeron 20, l'organe de transmission 40, le caisson de torsion 50 et le revêtement extérieur 60 pour finaliser l'élément aérodynamique 10.

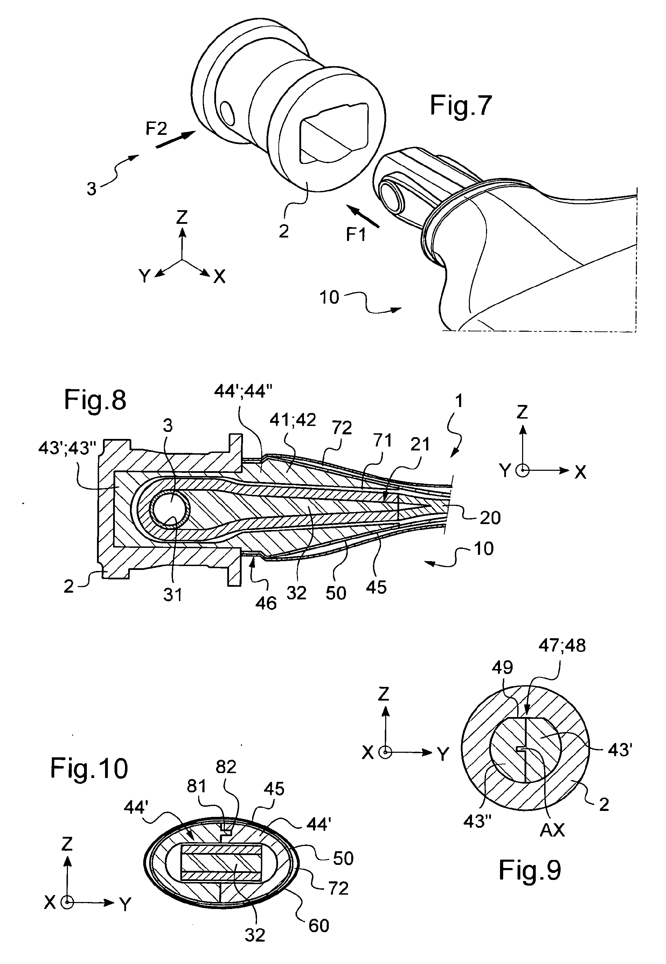

Enfin, conformément à la figure 7, on insère l'élément aérodynamique 10 selon la flèche F1 dans une ferrure 2 et on solidarise cette ferrure 2 à la douille 31 par un axe traversant 3 selon la flèche F2.

La figure 8 présente une coupe de la pale 1.

Notamment, cette coupe fait apparaître la zone d'attache 21 du longeron 20 entourant la douille 31 de transmission des efforts centrifuges liée par un axe traversant à la ferrure 2.

De plus, la pale 1 comportant un organe de transmission 40 des efforts de torsion pourvu d'une première demi-coquille 41 et d'une deuxième demi-coquille 42 enserrant conjointement la zone d'attache 21, la figure 8 présente l'une quelconque de ces demi-coquille, la deuxième demi-coquille par exemple. Un organe de remplissage 71 est présent entre le longeron 20 et l'organe de transmission 40.

Chaque demi-coquille comprend une première partie 43', 43" ajourée permettant un accès visuel à la douille 31 et une deuxième partie 44', 44" coopérant avec un caisson de torsion 50 entourant notamment la zone distale 22 du longeron 20.

Ce caisson de torsion 50 est recouvert d'un moyen de remplissage 72 et d'un revêtement extérieur 60.

On note que les deuxièmes parties des demi-coquilles définissent une surface tronconique 45 de contact avec le caisson de torsion 50, prolongée au niveau de sa section la plus grande par une surface en retrait 46 pour favoriser la tenue du revêtement extérieur sur le caisson de torsion en évitant l'arrachement de ce revêtement extérieur sous l'effet de forces centrifuges.

En référence à la figure 9, l'organe de transmission 40 est solidarisé à la ferrure 2 en rotation autour d'un axe de torsion AX de la pale 1 par un moyen d'arrêt 48, tel qu'un méplat 49 de la surface de contact 47 qui est définie par la première partie 43', 43" des demi-coquilles.

Selon un autre aspect, en référence à la figure 10, chaque section de la surface tronconique 45 est éventuellement elliptique.

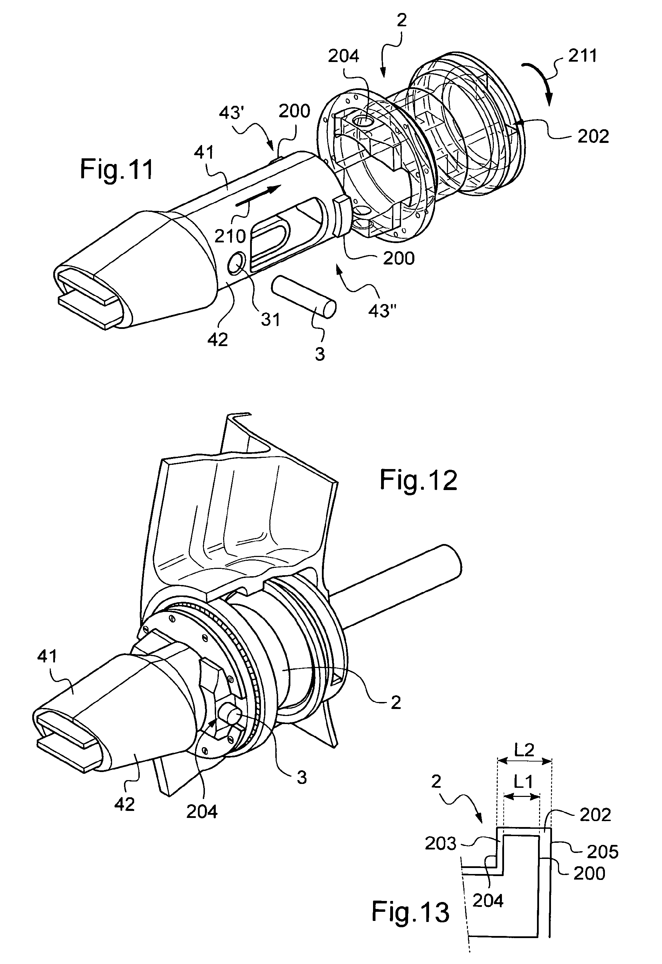

Par ailleurs, les figures 11 à 13 présentent une variante de l'invention munie d'un dispositif de retenue à baïonnette de l'élément aérodynamique 10 dans la ferrure 2.

Ainsi, la première partie 43' de la première demi-coquille 41 et la première partie 43" de la deuxième demi-coquille 42 comprennent chacune au moins un ergot 200 de fixation. Chaque ergot saille de la demi-coquille associée.

Dès lors, la ferrure 2 inclut une glissière longitudinale 201 débouchant sur une glissière en arc de cercle 202 par ergot.

Par suite, pour insérer l'élément aérodynamique 10 dans la ferrure 2, on fait coulisser les ergots 200 dans les glissières longitudinales 201 associées selon la flèche 210. Lorsque ces ergots 200 atteignent les glissières en arc de cercle 202, on pivote la ferrure 2 selon la flèche 211 pour mettre en coïncidence des perçages 204 de cette ferrure 2 avec chaque douille 31.

En référence à la figure 12, un axe traversant 3 de type goupille traverse alors la ferrure 2 et la douille 31 en passant par lesdits perçages 204.

On note que cet axe traversant 3 peut traverser un orifice dédié des demi-coquilles 41, 42 visible sur la figure 11. Toutefois, on comprend qu'un jeu sépare chaque demi-coquille de la douille 31 et de l'axe traversant 3 afin que les efforts centrifuges ne transitent pas par les demi-coquilles durant des conditions normales, à savoir en l'absence d'une rupture de l'axe traversant.

En référence à la figure 13, chaque ergot s'étendant selon une direction longitudinale sur une longueur prédéterminée L1, chaque glissière en arc de cercle 202 s'étend longitudinalement sur une longueur L2 supérieure à ladite longueur prédéterminée L1.

Par suite, la ferrure 2 présente un jeu 203 entre chaque ergot 200 et la glissière en arc de cercle 202 associée.

La ferrure 2 peut alors comporter un capteur apte à détecter un contact entre un ergot et des faces 204, 205 de cette ferrure 2. Ainsi, une rupture de l'axe traversant 3 entraîne ledit contact, ce contact étant dès lors détecté et signalé par les capteurs prévus à cet effet.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Pale (1) munie d'une ferrure (2) de fixation à un moyeu et d'un élément aérodynamique (10) ayant un longeron (20) s'étendant en envergure d'une zone d'attache (21) vers une zone distale (22), ladite zone d'attache (21) entourant une douille (31) de transmission des efforts centrifuges liée par un axe traversant (3) à ladite ferrure (2),
**caractérisée en ce qu'**elle comporte un organe de transmission (40) des efforts de torsion pourvu d'une première demi-coquille (41) et d'une deuxième demi-coquille (42) enserrant conjointement ladite zone d'attache (21), chaque demi-coquille (41, 42) comprenant une première partie (43', 43") ajourée permettant un accès visuel à ladite douille (31) lorsque ledit élément aérodynamique est retiré de la ferrure et une deuxième partie (44', 44") coopérant avec un caisson de torsion (50) entourant ladite zone distale (22), ledit organe de transmission (40) étant solidaire de ladite ferrure en rotation autour d'un axe de torsion (AX) de la pale (1).

2. Pale selon la revendication 1,
**caractérisée en ce que** ledit caisson de torsion (50) est disposé autour de la zone distale (22) du longeron (20), un revêtement extérieur (60) recouvrant ledit caisson de torsion (50).

3. Pale selon l'une quelconque des revendications 1 à 2,
**caractérisée en ce qu'**un moyen de remplissage (72) est agencé entre ledit caisson de torsion (50) et un revêtement extérieur (60).

4. Pale selon l'une quelconque des revendications 1 à 3,
**caractérisée en ce qu'**un organe de remplissage (71) est agencé entre ledit longeron (20) et l'organe de transmission (40).

5. Pale selon l'une quelconque des revendications 1 à 4,
**caractérisée en ce que** ladite deuxième partie (44') de la première demi-coquille (41) et ladite deuxième partie (44") de la deuxième demi-coquille (42) forment conjointement une surface tronconique (45) en contact avec ledit caisson de torsion (50).

6. Pale selon la revendication 5,
**caractérisée en ce que** ladite surface tronconique (45) comprend des sections elliptiques.

7. Pale selon l'une quelconque des revendications 1 à 6,
**caractérisée en ce que** ladite première partie (43') de la première demi-coquille (41) et ladite première partie (43") de la deuxième demi-coquille 42) forment conjointement un cylindre (46) solidarisé en rotation à ladite ferrure (2).

8. Pale selon l'une quelconque des revendications 1 à 7,
**caractérisée en ce que** ladite première partie (43') de la première demi-coquille (41) et ladite première partie (43") de la deuxième demi-coquille (42) forment conjointement une surface de contact (47) solidarisée en rotation à ladite ferrure (2) par un moyen d'arrêt (48).

9. Pale selon la revendication 8,
**caractérisée en ce que** ledit moyen d'arrêt (48) est un méplat (49) de ladite surface de contact (47).

10. Pale selon l'une quelconque des revendications 1 à 9,
**caractérisée en ce qu'**elle comporte un moyen d'assemblage (80) de la première demi-coquille (41) à la deuxième demi-coquille (42).

11. Pale selon l'une quelconque des revendications 1 à 10,
**caractérisée en ce que** ledit longeron (20) comporte des fibres s'étendant selon une direction longitudinale (X1) de la pale (1), ledit caisson de torsion (50) comportant des fibres s'étendant selon une direction présentant un angle aigu avec ladite direction longitudinale (X1).

12. Pale selon l'une quelconque des revendications 1 à 11,
**caractérisée en ce que** ladite première partie (43') de la première demi-coquille (41) et ladite première partie (43") de la deuxième demi-coquille (42) comprennent chacune un ergot (200) de fixation, ladite ferrure ayant une glissière longitudinale (201) et une glissière en arc de cercle (202) par ergot.

13. Pale selon la revendication 12,
**caractérisée en ce que** chaque ergot s'étendant selon une direction longitudinale sur une longueur prédéterminée, chaque glissière en arc de cercle (202) s'étend longitudinalement sur une longueur supérieure à ladite longueur prédéterminée pour présenter un jeu lorsque ledit ergot est inséré dans cette glissière en arc de cercle.

14. Procédé de fabrication d'une pale (1) selon l'une quelconque des revendications 1 à 13 au cours duquel :
- on fabrique un longeron (20) s'étendant d'une zone d'attache (21) vers une zone distale (22), ladite zone d'attache (22) entourant une douille (31), puis on pré-polymérise ce longeron (20),
- on agence un organe de transmission (40) des efforts de torsion pourvu d'une première demi-coquille (41) et d'une deuxième demi-coquille (42) sur ladite zone d'attache (21), chaque demi-coquille (41, 42) comprenant une première partie (43', 43") ajourée permettant un accès à ladite douille (31) et une deuxième partie (44', 44"),
- on fabrique un caisson de torsion (50) autour de ladite deuxième partie (44', 44") de chaque demi-coquille (41, 42) et de la zone distale (22) du longeron (20),
- on fabrique un revêtement extérieur (60) autour du caisson de torsion (50) puis on polymérise l'ensemble comportant le longeron (20), l'organe de transmission (40), le caisson de torsion (50) et le revêtement extérieur (60) pour obtenir un élément aérodynamique (10),
- on insère l'élément aérodynamique (10) dans une ferrure (2) et on relie ladite ferrure (2) à ladite douille (31) par un axe traversant (3).

## Patentansprüche

1. Rotorblatt (1) mit einem Beschlag (2) zur Befestigung des Rotorblatts an einer Nabe und mit einem aerodynamischen Element (10) mit einem Längsträger (20), der sich von einem Befestigungsbereich (21) bis zu einem distalen Bereich (22) spannt, wobei der Befestigungsbereich (21) eine Buchse (31) zur Übertragung transversaler Kräfte umhüllt, die über eine durchgehende Achse (3) mit dem Beschlag (2) verbunden ist,
**dadurch gekennzeichnet, dass** es ein Organ (40) zur Übertragung von Torsionskräften aufweist, das mit einer ersten Halbschale (41) und einer zweiten Halbschale (42) versehen ist, die zusammen den Befestigungsbereich (21) umschließen, wobei jede Halbschale (41, 42) einen ersten Teil (43', 43") aufweist, der durchbrochen ist, um einen Sichtzugang zu der Buchse (31) zu ermöglichen, wenn das aerodynamische Element von dem Beschlag weggezogen wird, und einen zweiten Teil (44', 44"), der mit einem Torsionskasten (50) zusammenwirkt, der den distalen Bereich (22) umhüllt, wobei das Transmissionsorgan (40) um eine Torsionsachse (AX) des Rotorblatts (1) drehfest mit dem Beschlag verbunden ist.

2. Rotorblatt nach Anspruch 1,
**dadurch gekennzeichnet, dass** der Torsionskasten (50) um den distalen Bereich (22) des Längsträgers (20) herum angeordnet ist, und eine äußere Beschichtung (60) den Torsionskasten (50) bedeckt.

3. Rotorblatt nach einem der Ansprüche 1 bis 2,
**dadurch gekennzeichnet, dass** ein Auffüllmittel (72) zwischen dem Torsionskasten (50) und einer äußeren Beschichtung (60) angeordnet ist.

4. Rotorblatt nach einem der Ansprüche 1 bis 3,
**dadurch gekennzeichnet, dass** ein Auffüllorgan (71) zwischen dem Längsträger (20) und dem Übertragungsorgan (40) angeordnet ist.

5. Rotorblatt nach einem der Ansprüche 1 bis 4,
**dadurch gekennzeichnet, dass** der zweite Teil (44') der ersten Halbschale (41) und der zweite Teil (44") der zweiten Halbschale (42) zusammen eine kegelstumpfförmige Fläche (45) bilden, die in Kontakt mit dem Torsionskasten (50) steht.

6. Rotorblatt nach Anspruch 5,
**dadurch gekennzeichnet, dass** die kegelstumpfförmige Fläche (45) elliptische Abschnitte aufweist.

7. Rotorblatt nach einem der Ansprüche 1 bis 6,
**dadurch gekennzeichnet, dass** der erste Teil (43') der ersten Halbschale (41) und der erste Teil (43") der zweiten Halbschale (42) zusammen einen Zylinder (46) bilden, der drehfest mit dem Beschlag (2) verbunden ist.

8. Rotorblatt nach einem der Ansprüche 1 bis 7,
**dadurch gekennzeichnet, dass** der erste Teil (43') der ersten Halbschale (41) und der erste Teil (43") der zweiten Halbschale (42) zusammen eine Kontaktfläche (47) bilden, die drehfest mit dem Beschlag (2) durch ein Anschlagsmittel (48) verbunden ist.

9. Rotorblatt nach Anspruch 8,
**dadurch gekennzeichnet, dass** das Anschlagsmittel (48) eine Abflachung (49) der Kontaktfläche (47) ist.

10. Rotorblatt nach einem der Ansprüche 1 bis 9,
**dadurch gekennzeichnet, dass** es ein Mittel (80) zum Zusammenfügen der ersten Halbschale (41) mit der zweiten Halbschale (42) aufweist.

11. Rotorblatt nach einem der Ansprüche 1 bis 10,
**dadurch gekennzeichnet, dass** der Längsträger (20) Fasern aufweist, die sich in einer Längsrichtung (X1) des Rotorblatts (1) erstrecken, wobei der Torsionskasten (50) Fasern aufweist, die sich entlang einer Richtung erstrecken, die einen spitzen Winkel mit der Längsrichtung (X1) einnimmt.

12. Rotorblatt nach einem der Ansprüche 1 bis 11,
**dadurch gekennzeichnet, dass** der erste Teil (43') der ersten Halbschale (41) und der erste Teil (43") der zweiten Halbschale (42) jeweils einen Halterungsstift (200) aufweisen, wobei der Beschlag eine Längsgleitschiene (201) und eine kreisbogenförmige Gleitschiene (202) pro Halterungsstift aufweist.

13. Rotorblatt nach Anspruch 12,
**dadurch gekennzeichnet, dass** sich jeder Stift in einer Längsrichtung über eine vorbestimmte Länge erstreckt, jede kreisbogenförmige Gleitschiene (202) sich längs über eine Länge erstreckt, die größer ist als die vorbestimmte Länge, um ein Spiel zu bilden, wenn der Stift in die kreisbogenförmige Gleitschiene eingeführt ist.

14. Verfahren zur Herstellung eines Rotorblatts (1) nach einem der Ansprüche 1 bis 13, bei dem:
- ein Längsträger (20) hergestellt wird, der sich von einem Befestigungsbereich (21) bis zu einem distalen Bereich (22) erstreckt, wobei der Befestigungsbereich (22) eine Buchse (31) umschließt und anschließend dieser Längsträger (20) vorpolymerisiert wird,
- ein Organ (40) zur Übertragung von Torsionskräften, welches mit einer ersten Halbschale (41) und einer zweiten Halbschale (42) versehen ist, auf dem Befestigungsbereich (21) angeordnet wird, wobei jede Halbschale (41, 42) einen ersten Teil (43', 43") aufweist, der durchbrochen ist und einen Zugang zu der Buchse (31) und dem zweiten Teil (44', 44") erlaubt,
- ein Torsionskasten (50) um das zweite Teil (44', 44") jeder Halbschale (41, 42) und um den distalen Bereich (22) des Längsträgers (20) herum hergestellt wird,
- eine äußere Beschichtung (60) um den Torsionskasten (50) hergestellt wird, und dann die Gesamtheit, die den Längsträger (20), das Übertragungsorgan (40), den Torsionskasten (50) und die äußere Beschichtung (60) umfasst, polymerisiert wird, um ein aerodynamisches Element (10) zu erhalten,
- das aerodynamische Element (10) in einen Beschlag (2) eingefügt wird, und der Beschlag (2) mit der Buchse (31) über eine durchgehende Achse (3) verbunden wird.

## Claims

1. A blade (1) provided with a fitting (2) for fastening to a hub and with an aerodynamic element (10) having a longitudinal member (20) extending span-wise from an attachment zone (21) towards a distal zone (22), said attachment zone (21) surrounding a bush (31) for transmitting centrifugal forces which is connected to said fitting (2) by a through pin (3),
**characterised in that** it comprises a transmission member (40) for torsional forces which is provided with a first half-shell (41) and a second half-shell (42) which jointly tightly surround said attachment zone (21), each half-shell (41, 42) comprising a first, perforated, part (43', 43") which allows visual access to said bush (31) when said aerodynamic element is removed from the fitting and a second part (44', 44") cooperating with a torsion box (50) surrounding said distal zone (22), said transmission member (40) being integral with said fitting in rotation about a torsion axis (AX) of the blade (1).

2. A blade according to Claim 1,
**characterised in that** said torsion box (50) is arranged around the distal zone (22) of the longitudinal member (20), an outer covering (60) covering said torsion box (50).

3. A blade according to any one of Claims 1 to 2,
**characterised in that** a filling means (72) is arranged between said torsion box (50) and an outer covering (60).

4. A blade according to any one of Claims 1 to 3,
**characterised in that** a filling member (71) is arranged between said longitudinal member (20) and the transmission member (40).

5. A blade according to any one of Claims I to 4,
**characterised in that** said second part (44') of the first half-shell (41) and said second part (44") of the second half-shell (42) jointly form a frustoconical surface (45) in contact with said torsion box (50).

6. A blade according to Claim 5,
**characterised in that** said frustoconical surface (45) comprises elliptical sections.

7. A blade according to any one of Claims 1 to 6,
**characterised in that** said first part (43') of the first half-shell (41) and said first part (43") of the second half-shell (42) jointly form a cylinder (46) which is secured in rotation to said fitting (2).

8. A blade according to any one of Claims 1 to 7,
**characterised in that** said first part (43') of the first half-shell (41) and said first part (43") of the second half-shell (42) jointly form a contact surface (47) which is secured in rotation to said fitting (2) by a stop means (48).

9. A blade according to Claim 8,
**characterised in that** said stop means (48) is a flat (49) of said contact surface (47).

10. A blade according to any one of Claims I to 9,
**characterised in that** it comprises a means (80) for assembling the first half-shell (41) with the second half-shell (42).

11. A blade according to any one of Claims 1 to 10,
**characterised in that** said longitudinal member (20) comprises fibres extending in a longitudinal direction (X1) of the blade (1), said torsion box (50) comprising fibres extending in a direction having an acute angle with said longitudinal direction (X1).

12. A blade according to any one of Claims 1 to 11,
**characterised in that** said first part (43') of the first half-shell (41) and said first part (43") of the second half-shell (42) each comprise a fastening lug (200), said fitting having one longitudinal slideway (201) and one slideway (202) in the shape of an arc of a circle per lug.

13. A blade according to Claim 12,
**characterised in that**, each lug extending in a longitudinal direction over a predetermined length, each slideway (202) in the shape of an arc of a circle extends longitudinally over a length greater than said predetermined length to exhibit a clearance when said lug is inserted into this slideway in the shape of an arc of a circle.

14. A method for manufacturing a blade (1) according to any one of Claims 1 to 13, during which:
- a longitudinal member (20) extending from an attachment zone (21) towards a distal zone (22) is manufactured, said attachment zone (22) surrounding a bush (31), then this longitudinal member (20) is pre-polymerised,
- a transmission member (40) for the torsional forces which is provided with a first half-shell (41) and a second half-shell (42) is arranged on said attachment zone (21), each half-shell (41, 42) comprising a first, perforated, part (43', 43") giving access to said bush (31), and a second part (44', 44"),
- a torsion box (50) is produced around said second part (44', 44") of each halfshell (41, 42) and the distal zone (22) of the longitudinal member (20),
- an outer covering (60) is produced around the torsion box (50), then the assembly comprising the longitudinal member (20), the transmission member (40), the torsion box (50) and the outer covering (60) is polymerised in order to obtain an aerodynamic element (10),
- the aerodynamic element (10) is inserted into a fitting (2) and said fitting (2) is connected to said bush (31) by a through pin (3).
